(19) **Europäisches Patentamt / European Patent Office / Office européen des brevets**

(11) **EP 2 103 981 A1**

(12) # EUROPEAN PATENT APPLICATION

(43) Date of publication:
  **23.09.2009 Bulletin 2009/39**

(51) Int Cl.:
  **G02B 15/04** *(2006.01)*    *G02B 21/24* *(2006.01)*

(21) Application number: **09003272.3**

(22) Date of filing: **06.03.2009**

(84) Designated Contracting States:
  **AT BE BG CH CY CZ DE DK EE ES FI FR GB GR HR HU IE IS IT LI LT LU LV MC MK MT NL NO PL PT RO SE SI SK TR**
  Designated Extension States:
  **AL BA RS**

(30) Priority: **19.03.2008  JP 2008071795**

(71) Applicant: **Mitutoyo Corporation**
  **Takatsu ku**
  **Kawasaki-shi**
  **Kanagawa-ken 213-8533 (JP)**

(72) Inventors:
  • **Shimokawa, Seiji**
    **Kawasaki-shi**
    **Kanagawa 213-8533 (JP)**
  • **Nagahama, Tatsuya**
    **Kawasaki-shi**
    **Kanagawa 213-8533 (JP)**
  • **Moriuchi, Eisuke**
    **Kawasaki-shi**
    **Kanagawa 213-8533 (JP)**

(74) Representative: **Grünecker, Kinkeldey,**
  **Stockmair & Schwanhäusser**
  **Anwaltssozietät**
  **Leopoldstrasse 4**
  **80802 München (DE)**

(54)  **Optical unit and measuring instrument with plural afocal optical systems for changing magnification**

(57)    An optical unit includes: an objective lens (1); an imaging lens (2) that is arranged in the optical axis of the objective lens (1) and images a light beam output from the objective lens (1); a plurality of afocal optical systems (11, 12) that are arranged between the objective lens (1) and the imaging lens (2) and have different afocal magnifications ($\alpha$1, $\alpha$2); and a switch (21) that shifts either one of the afocal optical systems (11, 12) to be aligned with the optical axis of the objective lens (1).

FIG. 2

EP 2 103 981 A1

## Description

## BACKGROUND OF THE INVENTION

### 1. FIELD OF THE INVENTION

The present invention relates to an optical unit and a measuring instrument. Specifically, it relates to an optical unit and a measuring instrument that can change optical magnification.

### 2. DESCRIPTION OF RELATED ART

Conventionally, various methods for changing optical magnification have been used in an image measuring instrument, an optical instrument and the like.

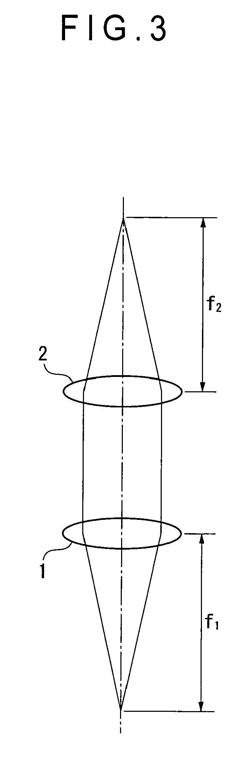

An optical system that forms an image with the use of an objective lens 1 and an imaging lens 2 as shown in Fig. 3 is called an infinity-correction optical system. When a focal length of the objective lens 1 is f1 and a focal length of the imaging lens 2 is f2, optical magnification β is expressed by the formula:

$$\beta = f2/f1$$

When the focal length f1 of the objective lens 1 is fixed, the optical magnification β can be changed by changing the focal length f2 of the imaging lens 2.

In order to change the focal length f2 of the imaging lens 2, a lens switching method that switches the imaging lens 2 and an optical path switching method that switches an optical path from the objective lens 1 are known.

The former lens switching method shifts imaging lenses 2A and 2B having different focal lengths f2 and f3 respectively to be aligned with an optical axis of the objective lens 1 with the use of a slide mechanism 3 which slides in a direction perpendicular to the optical axis of the objective lens 1 as shown in Fig. 4, or with the use of a turret mechanism (see, for instance, Document 1: JP-A-09-304682).

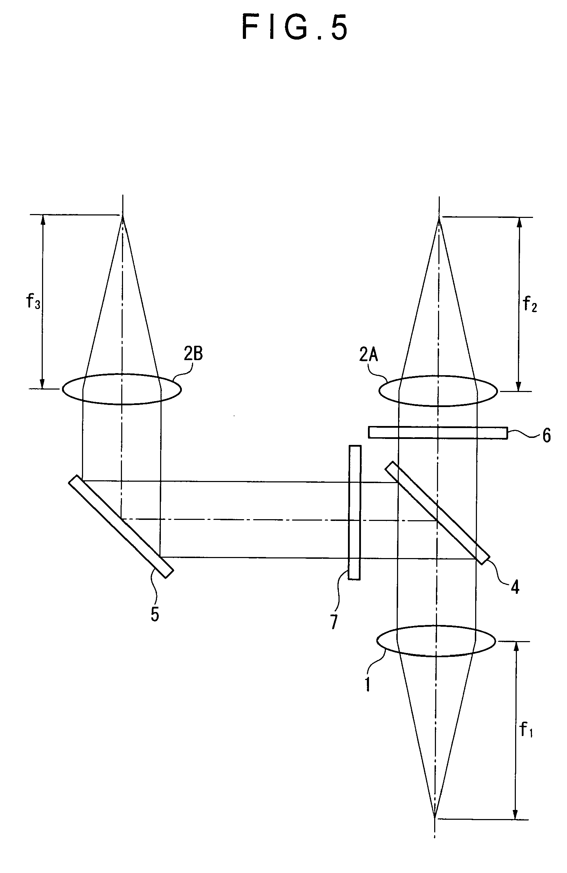

The latter optical path switching method branches a light beam from the objective lens 1 into two optical paths by using two half mirrors as shown in Fig. 5. In the respective branched optical paths, the imaging lenses 2A and 2B having different focal lengths f2 and f3 respectively are arranged. In the respective branched optical paths, mechanical shutters 6 and 7 are arranged. Switching the mechanical shutters 6 and 7 switches the respective optical paths to switch the magnification.

However, the conventional magnification switching methods have disadvantage as follows.

In the former lens switching method, the mechanical accuracy (including repeatability) of the slide mechanism and the turret mechanism is limited, so that optical axes of the imaging lenses 2A and 2B 1 are misaligned with the optical axis of the objective lens in switching the magnification. Consequently, the focal position is not at the center of the imaging lens, so that a highly accurate measurement is not expected.

In the latter optical path switching method, the imaging lenses 2A and 2B do not move, so that the optical axes of the imaging lenses 2A and 2B are not misaligned with the optical axis of the objective lens 1 in switching the magnification. However, the optical path requires to be branched by the half mirrors 4 and 5, resulting in decrease in light quantity. In addition, an imaging device such as a camera requires to be arranged correspondingly to each of the imaging lenses 2A and 2B, resulting in a large economic burden.

## SUMMARY OF THE INVENTION

An object of the invention is to solve the above disadvantages and to provide an optical unit and a measuring instrument that minimize influence caused by a deviation between optical axes in switching the magnification so that a highly accurate measurement can be achieved without incurring economic burden.

An optical unit of the invention includes: an objective lens; an imaging lens that is arranged on the optical axis of the objective lens and images a light beam output from the objective lens; a plurality of afocal optical systems that are arranged between the objective lens and the imaging lens and have different afocal magnifications; and a switch that shifts one of the afocal optical systems into the optical axis of the objective lens.

According to such an arrangement, one of the plurality of the afocal optical systems is shifted to be aligned with the optical axis of the objective lens by the switching operation with the switch in switching the magnification. When a focal length of the objective lens is f1, a focal length of the imaging lens is f2 and an afocal magnification of the afocal optical system is α, an optical magnification β of the optical unit is expressed by the formula:

$$\beta = (f2/f1) \times \alpha$$

Accordingly, by the switching operation with the switch that the afocal optical systems having different magnifications are shifted to be aligned with the optical axis of the objective lens, the optical magnifications can be switched.

Even if the optical axes of the afocal optical systems are misaligned with the optical axes of the objective lens and the imaging lens in the switching operation, parallel light beams from the afocal optical systems always image at the center of the optical axis of the imaging lens, thereby minimizing a deviation of the focus from the center of the imaging lens. Accordingly, the highly accurate measurement can be achieved.

Further, since the optical path is not branched, the light quantity does not decrease and the economic burden incurred by additionally mounting an imaging device such as a camera is small.

In the optical unit of the above aspect of the invention, it is preferable that the switch is provided by one of a slide mechanism that linearly moves the afocal optical systems in a direction substantially perpendicular to the optical axis of the objective lens and a turret mechanism that moves the afocal optical systems in an arc.

According to such an arrangement, even if the slide mechanism and the turret mechanism do not have a high mechanical accuracy including repeatability, influence caused by a deviation of the optical axis can be reduced, so that the slide mechanism and the turret mechanism can be manufactured easily and with low cost. Consequently, the cost of the optical unit can be reduced as a whole.

The measuring instrument according to another aspect of the invention includes one of the optical units described above.

Herein, the measuring instrument includes an image measuring instrument and an optical measuring microscope.

According to such an arrangement, an image measuring instrument and an optical measuring microscope that can achieve the above advantage can be provided.

**BRIEF DESCRIPTION OF THE DRAWINGS**

Fig. 1 shows an exemplary embodiment of an optical unit of the invention.
Fig. 2 is an illustration showing switched magnification in the above embodiment.
Fig. 3 shows an infinity-correction optical system.

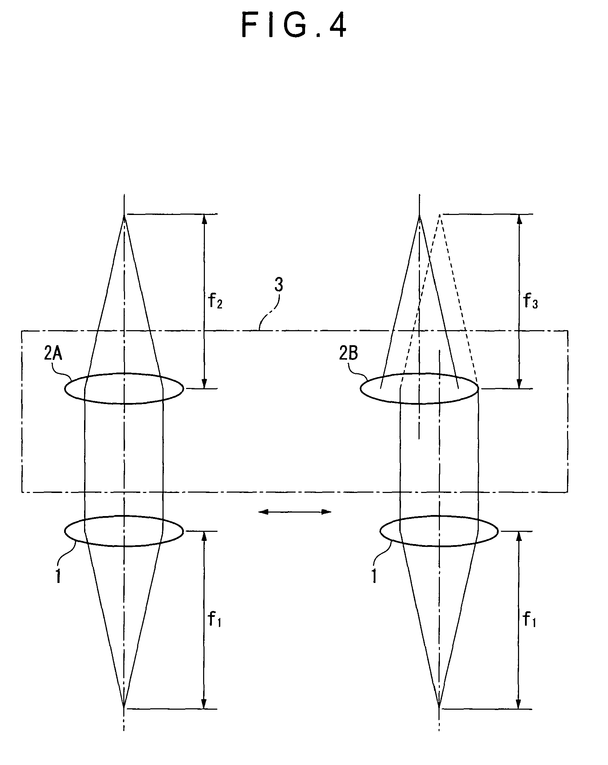

Fig. 4 shows a conventional lens-switching method in switching the magnification.
Fig. 5 shows a conventional optical path switching method in switching the magnification.

**DETAILED DESCRIPTION OF PREFERRED EMBODIMENT(S)**

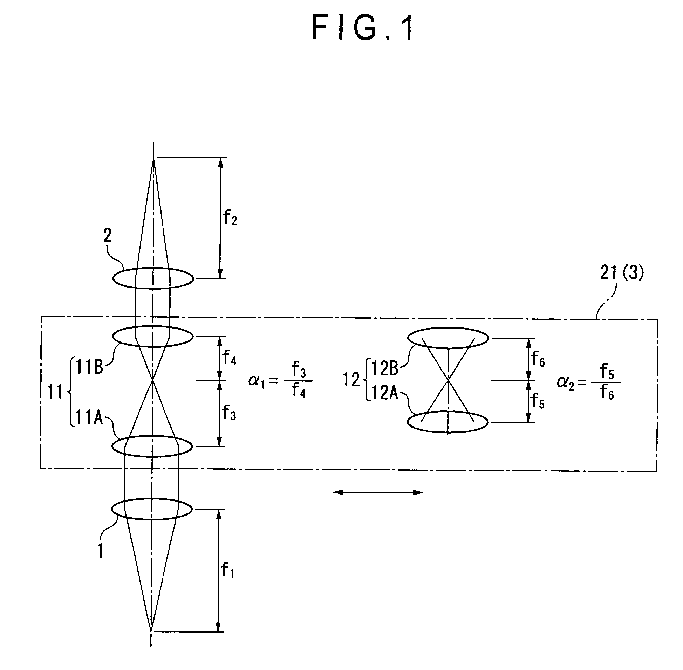

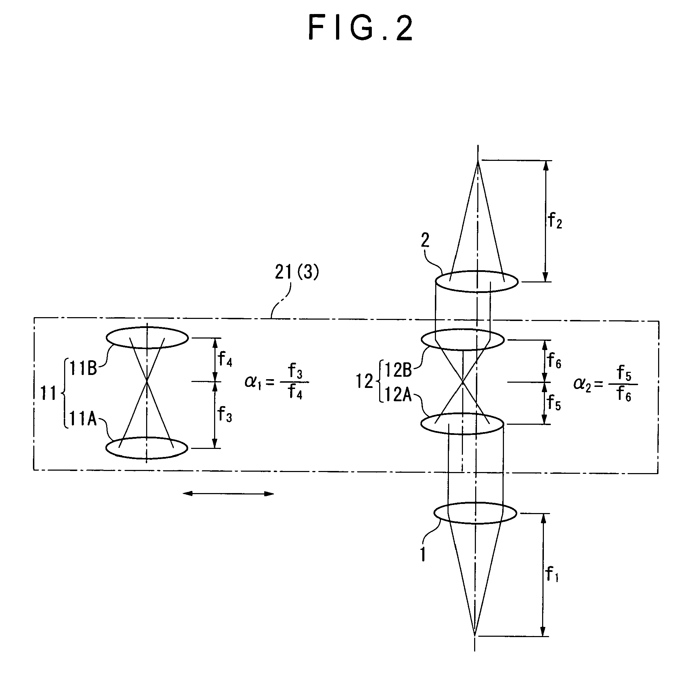

Explanation of Overall Structure (see Figs. 1 and 2)

Fig. 1 shows an exemplary embodiment of an optical unit of the invention and Fig. 2 is an illustration showing switched magnification.

An optical unit includes: an objective lens 1; an imaging lens 2 that is arranged on an optical axis of the objective lens 1 and images a light beam output from the objective lens 1; a plurality of afocal optical systems 11 and 12 that are arranged between the objective lens 1 and the imaging lens 2 and have different afocal magnifications; and a switch 21 that shifts either one of the afocal optical systems 11 and 12 into the optical axis of the objective lens 1.

The objective lens 1 and the imaging lens 2 are coaxial and are spaced apart with each other by an interval. In other words, the objective lens 1 and the imaging lens 2 are arranged space apart by an interval so that the optical axis of the imaging lens 2 is aligned with the optical axis of the objective lens 1.

Afocal optical systems 11 and 12 include a first afocal optical system 11 and a second afocal optical system 12, both of which have different afocal magnifications.

The first afocal optical system 11 includes a convex lens 11A that is arranged on the side at the objective lens 1 and has a focal length f3 and a convex lens 11B that is arranged on the side at the imaging lens 2 and has a focal length f4. In short, the first afocal optical system 11 is provided by a Kepler type afocal optical system consisting of two convex lenses. The convex lenses 11 A and 11B are arranged so that a front focal position of the convex lens 11B coincides with a back focal position of the convex lens 11A. Accordingly, an afocal magnification $\alpha1$ of the first afocal optical system 11 is expressed by the formula:

$$\alpha1 = f3/f4$$

The second afocal optical system 12 includes a convex lens 12A that is arranged on the side at the objective lens 1 and has a focal length f5 and a convex lens 12B that is arranged on the side at the imaging lens 2 and has a focal length f6. In short, the second afocal optical system 12 is provided by a Kepler type afocal optical system consisting of two convex lenses. The convex lenses 12A and 12B are arranged so that a front focal position of the convex lens 12B coincides with a back focal position of the convex lens 12A. Accordingly, an afocal magnification $\alpha2$ of the second afocal optical system 12 is expressed by the formula:

$$\alpha2 = f5/f6$$

A switch 21 includes a slide mechanism 3 that linearly slides the first afocal optical system 11 and the second afocal optical system 12 in a direction substantially perpendicular to the optical axis of the objective lens 1.

A known slide mechanisms may be used for the slide mechanism 3. For example, the slide mechanism includes a slider that slides in a direction perpendicular to the optical axis of the objective lens 1 and a guiding mechanism that guides the slider, where the first afocal optical system 11 and the second afocal optical system 12 are arranged in the sliding direction of the slider with an interval. Accordingly, when the slider is slid in the direction perpendicular to the optical axis of the objective lens 1, either one of afocal optical systems 11 and 12 is shifted into the optical axis of the objective lens 1.

Though not shown in Figs. 1 and 2, an illumination light may be incident on the half mirrors, for instance, from the direction perpendicular to the optical axis of the objective lens 1 by inserting the half mirrors between the objective lens 1 and the afocal optical systems 11 and 12.

Further, for an imaging measuring instrument, an imaging device such as CCD camera is arranged at an imaging position of the imaging lens 2.

Magnification Switching Operation

In a state of Fig. 1 where the afocal magnification of the first afocal optical system 11 is α1, the magnification β1 of the optical unit is expressed by the formula:

$$\beta1 = (f2/f1) \times \alpha1$$

In this state, the slide mechanism 3 is slid to shift the second afocal optical system 12 into the optical axis of the objective lens 1.

Consequently, as shown in Fig. 2, the optical axis of the second optical system 12 is sometimes misaligned with the optical axis of the objective lens 1. Even if the optical axis of the second optical system 12 is misaligned with the optical axis of the objective lens 1, a parallel light beam from the second optical system 12 always images at the center of the optical axis of the imaging lens 2, thereby minimizing a deviation of the focus from the center of the imaging lens.

In a state of Fig. 2 where the afocal magnification of the second afocal optical system 12 is α2, the magnification β2 of the optical unit is expressed by the formula:

$$\beta2 = (f2/f1) \times \alpha2$$

Advantage of Embodiment

In the above embodiment, the first afocal optical system 11 and the second optical system 12, both of which have different magnifications, are arranged between the objective lens 1 and the imaging lens 2 with the switch 21 provided for shifting either one of the first afocal optical system 11 and the second afocal optical system 12 into the optical axis of the objective lens 1. By switching operation with the switch 21 to shift either one of the first afocal optical system 11 and the second optical system 12 into the optical axis of the objective lens 1, the magnification can be switched.

Even if the optical axes of the afocal optical systems 11 and 12 are misaligned with the optical axes of the objective lens 1 and the imaging lens 2, parallel light beams from the afocal optical systems 11 and 12 always image at the center of the optical axis of the imaging lens 2, thereby minimizing a deviation of the focus from the center of the imaging lens. Accordingly, highly accurate measurement can be achieved.

Further, the optical unit of the above embodiment does not require branched optical path, so that light quantity does not decrease and the economic burden by additionally mounting an imaging device such as a camera is small.

Moreover, according to an arrangement of the image measuring instrument provided with the above optical unit, a highly accurate measuring instrument can be economically provided.

Modifications

The invention is not limited to the forgoing exemplary embodiment, but includes modifications, improvements and the like within the range in which an object of the invention can be achieved.

In the forgoing exemplary embodiment, the afocal optical systems 11 and 12 are provided by a Kepler type consisting of the two convex lenses 11A and 11B and 12A and 12 B, but the structure is not limited to this. For example, a Galileo type afocal optical system consisting of a concave lens and convex lens may be used.

Further, the afocal optical systems 11 and 12 are not limited to ones consisting of two lenses, but may be a zoom optical system or may be provided within the objective lens 1 and/or the imaging lens 2.

In the forgoing exemplary embodiment, the two afocal optical systems 11 and 12 are provided, either one of which is switched onto the optical axis of the objective lens 1. However, three or more afocal optical systems may be provided.

In the forgoing exemplary embodiment, the switch 21 includes the slide mechanism 3, but the structure is not limited to this. For example, the turret mechanism may be used to move the afocal optical systems 11 and 12 in an arc to shift. If the turret mechanism is used to shift the afocal optical system as the number thereof increases, more afocal optical systems can be provided in a small space.

**Claims**

1. An optical unit, comprising:

    an objective lens (1);
    an imaging lens (2) that is arranged on an optical axis of the objective lens (1) and images a light beam output from the objective lens (1);
    a plurality of afocal optical systems (11, 12) that

**EP 2 103 981 A1**

are arranged between the objective lens (1) and the imaging lens (2) and differ in afocal magnification; and
a switch (21) that shifts one of the afocal optical systems (11, 12) into the optical axis of the objective lens (1).

2. The optical unit according to claim 1,
wherein the switch (21) is provided by either one of a slide mechanism (3) that linearly moves the afocal optical systems (11, 12) in a direction substantially perpendicular to the optical axis of the objective lens (1), and a turret mechanism that moves the afocal optical systems (11, 12) in an arc.

3. A measuring instrument, comprising the optical unit according to claim 1 or claim 2.

# FIG.1

$$\alpha_1 = \frac{f_3}{f_4}$$

$$\alpha_2 = \frac{f_5}{f_6}$$

# FIG.2

$$\alpha_1 = \frac{f_3}{f_4}$$

$$\alpha_2 = \frac{f_5}{f_6}$$

# F I G . 3

# FIG.4

# F I G . 5

Europäisches
Patentamt
European
Patent Office
Office européen
des brevets

# EUROPEAN SEARCH REPORT

**Application Number**

EP 09 00 3272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 843 888 A (ARTHUR ABBEY) 10 August 1960 (1960-08-10) * page 2, line 11 - page 3, line 47 * | 1-3 | INV. G02B15/04 |
| X | EP 0 815 801 A (ZEISS CARL [DE]; ZEISS STIFTUNG [DE]) 7 January 1998 (1998-01-07) * page 3, line 53 - page 4, line 38; figure 1 * | 1-3 | ADD. G02B21/24 |
| X | US 3 402 976 A (HANS LITTMANN) 24 September 1968 (1968-09-24) * column 1, line 35 - line 38 * * column 2, line 27 - line 35; figures 1,3b * | 1-3 | |
| X | DE 24 39 820 A1 (MOELLER J D OPTIK) 4 March 1976 (1976-03-04) * page 3, lines 1-10 * | 1-3 | |
| X | US 5 528 416 A (HARTMANN RUDOLF [US]) 18 June 1996 (1996-06-18) * column 2, line 17 - column 3, line 37; figures 1,2 * * column 1, line 12 - line 25 * | 1-3 | TECHNICAL FIELDS SEARCHED (IPC) G02B |
| X | GB 2 332 755 A (GERSAN ETS [LI]) 30 June 1999 (1999-06-30) * page 7 - page 8; figure 1 * | 1-3 | |
| X | US 2006/176550 A1 (LUECKE CHRISTIAN [DE] ET AL) 10 August 2006 (2006-08-10) * paragraph [0034] - paragraph [0035] * | 1-3 | |
| X | GB 724 821 A (ERNST LEITZ GES MIT BESCHRAENK) 23 February 1955 (1955-02-23) * page 1, line 9 - page 2, line 36; figures 1,2,4 * | 1-3 | |

-/--

The present search report has been drawn up for all claims

| Place of search | Date of completion of the search | Examiner |
|---|---|---|
| Berlin | 23 April 2009 | A. Jacobs |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 09 00 3272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 1 985 227 A (HAAG AG STREIT [CH]) 29 October 2008 (2008-10-29) * paragraph [0062] - paragraph [0077]; figures 3,4 * ----- | 1-3 | |
| X | GB 1 214 265 A (ZEISS CARL; ZEISS STIFTUNG [DE]) 2 December 1970 (1970-12-02) * page 1, line 40 - line 53; figure 1 * ----- | 1-3 | |

TECHNICAL FIELDS
SEARCHED      (IPC)

The present search report has been drawn up for all claims

| Place of search | Date of completion of the search | Examiner |
|---|---|---|
| Berlin | 23 April 2009 | A. Jacobs |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 00 3272

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2009

| Patent document cited in search report | | | Publication date | Patent family member(s) | | | Publication date |
|---|---|---|---|---|---|---|---|
| GB 843888 | | A | 10-08-1960 | NONE | | | |
| EP 0815801 | | A | 07-01-1998 | DE | 69724193 | D1 | 25-09-2003 |
| | | | | DE | 69724193 | T2 | 17-06-2004 |
| | | | | JP | 4091143 | B2 | 28-05-2008 |
| | | | | JP | 10071158 | A | 17-03-1998 |
| | | | | US | 5795295 | A | 18-08-1998 |
| US 3402976 | | A | 24-09-1968 | DE | 1235620 | B | 02-03-1967 |
| DE 2439820 | | A1 | 04-03-1976 | JP | 51045542 | A | 19-04-1976 |
| US 5528416 | | A | 18-06-1996 | NONE | | | |
| GB 2332755 | | A | 30-06-1999 | AU | 754240 | B2 | 07-11-2002 |
| | | | | AU | 1774199 | A | 19-07-1999 |
| | | | | CA | 2316812 | A1 | 08-07-1999 |
| | | | | CN | 1290343 | A | 04-04-2001 |
| | | | | DE | 69812421 | D1 | 24-04-2003 |
| | | | | DE | 69812421 | T2 | 24-12-2003 |
| | | | | EP | 1042665 | A1 | 11-10-2000 |
| | | | | ES | 2193597 | T3 | 01-11-2003 |
| | | | | WO | 9934197 | A1 | 08-07-1999 |
| | | | | HK | 1020088 | A1 | 28-09-2001 |
| | | | | IL | 136966 | A | 12-05-2004 |
| | | | | JP | 2002500354 | T | 08-01-2002 |
| | | | | RU | 2227287 | C2 | 20-04-2004 |
| | | | | TW | 405038 | B | 11-09-2000 |
| | | | | ZA | 9811841 | A | 23-06-2000 |
| US 2006176550 | | A1 | 10-08-2006 | NONE | | | |
| GB 724821 | | A | 23-02-1955 | NONE | | | |
| EP 1985227 | | A | 29-10-2008 | JP | 2008276230 | A | 13-11-2008 |
| | | | | US | 2008278800 | A1 | 13-11-2008 |
| GB 1214265 | | A | 02-12-1970 | DE | 1988392 | U | 27-06-1968 |
| | | | | FR | 2005604 | A5 | 12-12-1969 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9304682 A